Europäisches Patentamt

European Patent Office

Office européen des brevets

(19)

(11) Publication number: **0 275 192**
**A2**

# EUROPEAN PATENT APPLICATION

(12)

(21) Application number: **88300248.7**

(22) Date of filing: **13.01.88**

(51) Int. Cl.⁴: **G 07 C 3/00**

(30) Priority: **16.01.87 US 3886**

(43) Date of publication of application:
**20.07.88 Bulletin 88/29**

(84) Designated Contracting States: **CH DE IT LI**

(71) Applicant: **GENERAL ELECTRIC COMPANY**
**1 River Road**
**Schenectady New York 10022 (US)**

(72) Inventor: **Kure-Jensen, Jens**
**18 Ledgewood Road**
**Manchester Massachusetts 01944 (US)**

**Devlin, Charles Louis**
**18 Komar Drive**
**Ballston Lake New York 12019 (US)**

**Walters, Joseph John**
**6 North Street**
**Ballston Lake New York 12019 (US)**

(74) Representative: **Kennington, Eric Alasdair et al**
**GE/RCA PATENT OPERATION Burdett House 4th Floor**
**15-16 Buckingham Street**
**London WC2N 6DU (GB)**

(54) **Reconfigurable integrated controls and displays for a turbomachine.**

(57) A control system for a turbomachine such as a steam turbine includes an integrated control and display system (32,34) with means for automatically reconfiguring itself for each phase of operation. In each phase, only those displays and controls (60,62,64,66) required during that phase are provided; all other controls and displays are omitted. In one embodiment, inputs from the turbomachine pass through a decision tree for uniquely determining the phase of operation. The output of the decision tree selects and display and control parameters from a screen library. The screen library controls and positions of indicia and indicators on the displays and controls. The indicated values are determined from measured parameters. In one embodiment, a touch screen is employed for executing controls. The X and Y values of touch-sensitive parts of the screen are interpreted in terms of the intended control functions for the particular existing phase of operation.

Fig. 2

## Description

### RECONFIGURABLE INTEGRATED CONTROLS AND DISPLAYS FOR A TURBOMACHINE

The present invention relates to control and display systems and, more particularly, to control and display systems adapted for controlling a turbomachine such as a steam turbine, e.g. for providing a display of the status of the steam turbine to guide the operator during the phases of steam-turbine operation.

A medium of large steam turbine represents such a major investment to its owners that great care in its operation is essential to ensure completion of its operational lifetime. Major causes for concern exist during startup, loading and shutdown of the steam turbine. Specifically, the life of a steam turbine is critically affected by the thermal and mechanical stresses to which it is exposed during these operations.

Startup of a steam turbine from a cold start generally includes the phases of prewarming, acceleration to operating speed, and loading. When the steam turbine is a prime mover driving an electric generator whose output is connected to an AC network, the acceleration phase includes acceleration to sychronous speed at which the frequency of the output of the electric generator approximates the network frequency. The generator then is connected to the network whence its speed becomes synchronously locked to the network frequency. Thereafter, increased power output from the steam turbine is absorbed in the network without change in the steam turbine-generator speed.

During startup, as hot steam is admitted to a cold steam turbine, thermal gradients are produced between the outer and inner portions of the turbine rotor. A correlation can be made between the magnitude of the thermal gradients and a reduction in the number of times the steam turbine may be started from the cold or hot condition without overstressing the rotor and casing materials. For example, if the temperature of the incoming steam exceeds the external surface temperature of the turbine wheel by 400 degrees F during each startup cycle, a typical steam turbine is capable of withstanding only one-fifth as many startup cycles compared to a steam turbine in which the steam-to-metal temperature difference is limited to about 300 degrees F. It can thus be seen that a difference of only 100 degrees F in steam-to-metal temperature has a major impact on the lifetime of a steam turbine subjected to repeated starting and stopping.

In addition to control of thermal gradients in the steam turbine rotor, close control of the steam turbine is required during the acceleration phase to ensure that inertially, derived radial wheel stresses, added to thermally derived stresses, remain within tolerable limits until the rotors in each turbine stage become heat soaked.

The enforcement of acceleration limits in a steam turbine operating as a prime mover driving an electric generator is especially severe prior to synchronization because the speed of the unloaded steam turbine-generator is acutely responsive to small variations in steam flow.

Furthermore, close control during the loading phase is required to avoid thermal insult to turbine components due to the admission of excessively hot or cool steam thereto.

The shutdown phase is similarly constrained to avoid damaging deceleration and thermal gradients.

In addition, hot re-start or shutdown following a load rejection or system trip requires maintenance of thermal and acceleration parameters within acceptable limits.

Automatic, and manually-aided automatic control systems exist for applying constraints to the startup and shutdown operation of a steam turbine. Generally, monitoring and intervention by an operator is required at critical points in the operating cycle. The information required from the system to the operator and the control inputs from the operator to the system differ between the phases of operation. The complexity and criticality of controlling the operation of a steam turbine requires that indicators be organized to give an operator all of the information needed at each particular phase and that controls be arranged with respect to the indicators in a manner enabling correct operator inputs in response to indicated values or conditions.

One method for organizing indicators and controls includes physically placing them on a schematic of the system. Another technique physically organizes them into functional groups, attention to which is required at different phases of operation. Both of these methods require large, and sometimes confusing, display panels.

In an embodiment of the invention integrated controls and displays are provided wherein only the information required during a particular phase of operation is displayed and only the controls required during that phase are available.

Further, an embodiment of the invention provides an integrated control and display system including means for automatically reconfiguring controls and displays providing only those controls and displays relevant to a particular phase of operation.

Preferably, the present invention provides a control system for a steam turbine including an integrated control and display system with means for automatically reconfiguring itself for each phase of operation. In each phase, only those displays and controls required during that phase are provided; all other controls and displays are omitted. In one embodiment, inputs from the steam turbine pass through a decision tree for uniquely determining the phase of operation. The output of the decision tree selects the display and control parameters from a screen library. The screen library controls the positions of indicia and indicators on the displays and controls. The indicated values are determined from measured parameters. In one embodiment, a touch screen is employed for executing controls. The X and Y values of touch-sensitive parts of the screen are interpreted in terms of the intended control functions for the particular existing phase of operation.

According to an embodiment of the invention, there is provided integrated controls and displays for a steam turbine, the steam turbine having at least first and second phases of operation, comprising: means for defining at least first and second control and display screens, the first control and display screen having first controls and first displays related to the first phase of operation, the second control and display screen having second controls and second displays related to the second phase of operation, at least one of the second controls and second displays being different from at least one of the first controls and first displays, a display, control means integrated with the display for accepting manual control inputs, screen handler means responsive to an existence of the first phase for displaying the first control and display screen on the display in response to the existence of the first phase, the screen handler means including means for displaying indicia identifying the first controls during the first phase, whereby manual inputs to the control means appropriate to the first phase are enabled, the screen handler means being further responsive to an existence of the second phase for displaying the second control and display screen on the display in response to the existence of the second phase, and the screen handler means including means for displaying indicia identifying the second controls during the second phase, whereby manual inputs to the control means appropriate to the second phase are enabled.

An embodiment of the present invention, given by way of non-limiting example, will now be described with reference to the accompanying drawings, in which like reference numerals designate the same elements.

Fig. 1 is a simplified schematic diagram of a steam turbine-generator system according to an embodiment of the invention.

Fig. 2 is a simplified block diagram of a control system and a display and manual input according to an embodiment of the invention.

Fig. 3 is a flow chart of a decision tree employed in an embodiment of the invention for uniquely selecting an operating phase and for selecting the single relevant display and control screen from a screen library.

Fig. 4 is an embodiment of a warming screen.

Fig. 5 is an embodiment of a rolloff and acceleration screen.

Fig. 6 is an embodiment of a synchronization screen.

Fig. 7 is an embodiment of a loading screen.

For descriptive purposes a reheat steam turbine is selected as the environment with which the illustrated embodiment is employed, but the present invention may be employed for controlling other types of steam turbine.

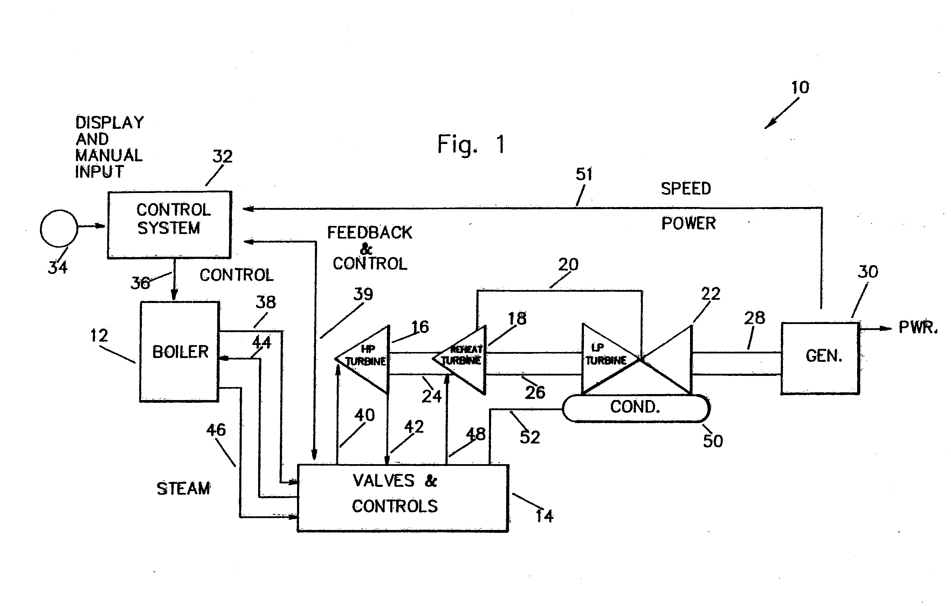

Referring to Fig. 1, there is shown, generally at 10, a steam turbine-generator system according to an embodiment of the invention. A boiler 12 produces steam which is fed through a valves and controls assembly 14 to a high-pressure steam turbine 16, a reheat turbine 18 and a low-pressure turbine 22. A shaft 24 of high-pressure steam turbine 16, a shaft 26 of reheat turbine 18 and a shaft 28 of low-pressure turbine 22 are concentrically aligned, and mechanically connected to apply the combined torques of high-pressure steam turbine 16, reheat turbine 18 and low-pressure turbine 22 to an electric generator 30. Electric generator 30 may be connected to an electric grid thereby to produce electric power in response to the sum of the applied torques.

Steam turbine-generator system 10, controlled by a control system 32, may include some automatic function and be responsive to control inputs from a display and manual input 34. A control line 36 from control system 32 applies boiler control signals to boiler 12 which are effective to control the firing rate of boiler 12. As is conventional, the control of the firing rate may include control of the number of burners (not shown) of a liquid, gaseous or solid fuel, or a combination thereof, and the rate at which the fuel is delivered to the burners.

Superheated steam generated in boiler 12 is applied on a main steam line 38 to valves and controls assembly 14. A valve-control signal from control system 32 is applied on a line 39 to valves and controls assembly 14, whereby a controlled flow of superheated steam is applied on a line 40 to high-pressure steam turbine 16. Exhaust steam from high-pressure steam turbine 16 flows on a high-pressure turbine exhaust line 42 to valves and controls assembly 14 from whence it returns on a cold reheat line 44 to a reheat portion (not shown) of boiler 12. After receiving additional heat, the steam is applied on a hot reheat line 46 to valves and controls assembly 14 for application on a reheat turbine inlet line 48 to reheat turbine 18. A feedback signal indicating the condition of valves and other conventional elements in valves and controls assembly 14 is applied on line 39 to control system 32.

In normal operation, steam from boiler 12 is expanded in high-pressure steam turbine 16 to produce torque, returned through boiler 12 for reheating, further expanded in reheat turbine 18 and fed on a reheat turbine exhaust line 20 to low-pressure turbine 22 where it is finally expanded before being condensed in a condenser 50. The speed and power output of electric generator 30 is measured using conventional apparatus (not shown) for developing feedback signals representing at least these quantities for application on a speed and power feedback line 51 to control system 32.

During conditions other than normal, steam turbine-generator system 10 operates in a far different manner. For example, prior to a cold start, shafts 24, 26 and 28, and the attached rotors of high-pressure steam turbine 16, reheat turbine 18 and low-pressure turbine 22, as well as the rotor of electric generator 30, are rotated at a slow rate by turning gear (not shown) to prevent bowing of the shafts with resulting misalignment of the turbine wheels.

The inventors have discovered that each phase of operation requires the availability of a unique set of controls and displays in display and manual input 34. When the set of controls and displays required for a phase of operation are provided, no need exists for controls and displays relating to any other phase of operation. With this discovery providing guidance, an overall concept for control system 32 and display and manual input 34 is disclosed.

Startup can be divided into the phases of 1) prewarming, 2) acceleration to synchronous speed, 3) synchronization, and 4) loading.

Initially, boiler 12 is cold and requires heating for as long as six to twelve hours to generate enough superheated steam to drive a full load. About an hour or two after heating begins, sufficient steam pressure becomes available to begin prewarming. Control system 32 is able to sense that prewarming is under way from a signal indicating this condition, an indication that the turning gear is engaged, and an indication that rotor speed is less than a predetermined low-speed threshold.

During prewarming, as the water temperature rises and steam pressure become available in boiler 12 (an hour or two after the burners are lighted), some of the steam is admitted to high-pressure steam turbine 16, reheat turbine 18 and low-pressure turbine 22 to begin warming the rotors and other parts of these equipments while on turning gear. Careful control of steam admission during prewarming, as well as during subsequent phases, is vital to limit thermally derived wheel stresses. In one technique, prewarming steam is admitted near the discharge ports of high-pressure steam turbine 16. A vent valve near the inlet port is opened to permit the steam to exit. Any steam in excess of that required for prewarming pases through a condenser inlet line 52 for condensation in condenser 50.

A conventional temperature monitor (not shown) monitors relevant temperatures in the system to determine when prewarming is completed. One type of temperature monitor suitable for monitoring prewarming is disclosed in U.S. Patent No. 4,104,908.

During a warm or hot start taking place, for example, after an overload trip, the temperature monitor may discern that prewarming is not required. In this event, operation passes directly to the subsequent phase without activating the prewarming controls and indicators.

Upon prewarming being completed, the prewarming controls and indicators, now not being of further value, are replaced by acceleration controls and indicators in preparation for the acceleration phase. During the acceleration phase, the warming rate is controlled to limit thermal stresses on the turbine wheels. In addition, the acceleration is controlled to limit mechanical stresses on the turbine wheels. The relationship between valve conditions and rotor speed is quite critical during this phase since there is no counterbalancing load applied to steam turbine-generator system 10 until electric generator 30 is engaged.

It will be recognized that the types of information required by the operator are different in the prewarming and acceleration phases. For example, during prewarming, since rotor speed is either controlled by turning gear and is less than a low-speed threshold, the operator has no interest in rotor speed. The operator's interests center on boiler temperature and pressure rotor warming, the relevant valve positions and the controls required to advance to the acceleration phase. On the contrary, during the acceleration phase, in addition to temperature and valve position data, indicators and controls sufficient to monitor and provide close control of rotor speed are crucial.

A rotor speed providing an output frequency from electric generator 30 within about one percent of the network frequency to which electric generator 30 will be connected signals the beginning of the synchonization phase. Detection of this condition changes the controls and indicators required by the operator to those relevant to completing the synchronization phase. Some of the controls and indicators required in the preceding phase are no longer needed and are removed from the operator's view.

The synchronization phase is completed when a circuit breaker, connecting the output of electric generator 30 to the network, is successfully closed. The unloaded electric generator 30, along with the remainder of steam turbine-generator system 10, is rotated at a speed determined by the frequency of the network. An indication of circuit-breaker closure signifies the beginning of the loading phase. Speed is not under the control of the operator once the electrical output of electric generator 30 is connected to the network and thus speed indicators are of no interest during this phase. Instead, as long as the circuit breaker remains closed, steam temperature and pressure, valve positions and electrical output are the important parameters for control and display.

In addition to the primary controls and displays during the above major phases, display of several additional conditions and the provision of controls to influence them are required during the major phases. If a generator trip occurs, transfer of control system 32 from a loading phase to an acceleration, prewarm or shutdown phase is performed.

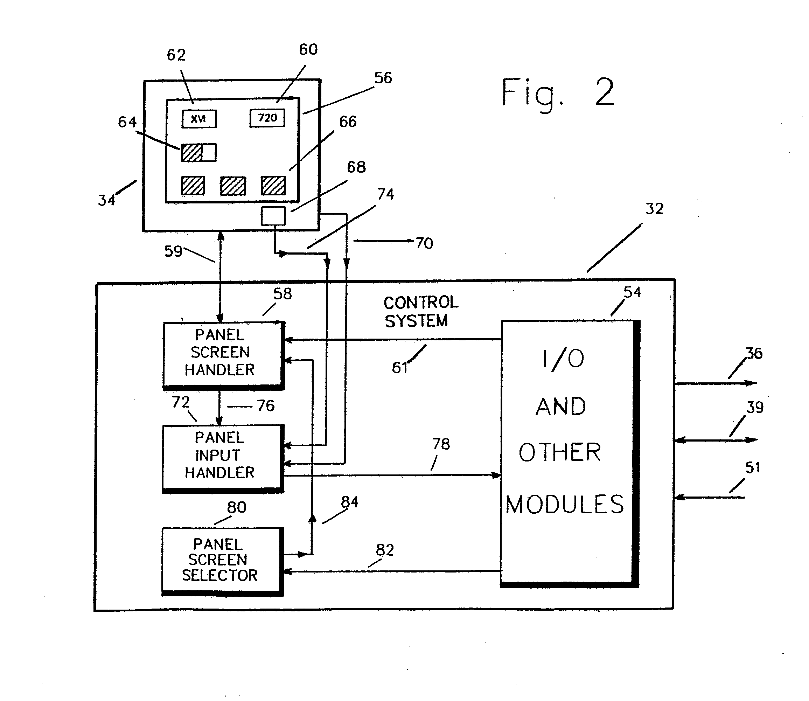

Referring now to Fig. 2, those elements of control system 32 necessary to the disclosure of the embodiment are shown as individual blocks in a block diagram. All remaining functions in control system 32 are considered to be conventional and are lumped in a single block labelled I/O and other modules 54. The input-output functions of I/O and other modules 54 may consist of suitable digital-to-analog and analog-to-digital converters (not shown) for converting between external analog signals and internal digital signals.

Although the present invention may apply to purely manual systems, the following description assumes that a manually aided automatic system is implemented. In such a manually aided automatic system, the operator enters desired parameters manually on display and manual input 34. These parameters are communicated to I/O and other modules 54 in a manner to be described hereinafter, and an analog, digital or hybrid processor in I/O and other modules 54 carries out the control activities and generates data for display on display and manual input 34.

The display function in display and manual input 34 is accomplished with a reconfigurable display 56 whose displayed indicia are generated by a panel screen handler 58 and communicated to reconfigurable display 56 on a line 59. The values of the data to be displayed on reconfigurable display 56 are determined in I/O and other modules 54 according to inputs received from elsewhere in steam turbine-generator system 10 and is transmitted on a line 61 to panel screen handler 58. Based on the phase of operation, panel screen handler 58 enables or inhibits the data display and positions enabled data as indicia in appropriate locations on reconfigurable display 56. The displayed indicia may be of any type such as, for example, numeric data 60, alphanumeric data 62 and/or bar data 64. Reconfigurable display 56 may be any convenient type of reconfigurable display device such as, for example, cathode ray tube, liquid crystal display, plasma display, active semiconductor display, or vacuum fluorescent display.

In addition to the display function, reconfigurable display 56 preferably includes reconfigurable input means for accepting manual inputs. Specific areas on reconfigurable display 56 may be set aside for operator access. For example, control areas 66 on reconfigurable display 56 may be responsive to touch for initiating an action or setting a parameter. The labeling and significance of specific control areas 66 change between phases. Some control areas 66 may be inactive in some phases. The labelling of control areas 66 can be accomplished by the reconfigurable display device of reconfigurable display 56. Any suitable means may be employed for accepting manual input. For example, rotary controls may be disposed adjacent to reconfigurable display 56 and labelled on nearby portions of the reconfigurable display device. In the preferred embodiment, however, control areas 66 are preferably areas on reconfigurable display 56 capable of being stimulated by the operator to accept the desired inputs. Control areas 66 may be touch sensitive, for example, using conventional membrane devices whose control function is performed by pressing the surface of reconfigurable display 56 at the indicated locations. Alternatively, control areas 66 may employ conventional photo-optical sensing devices overlaid on reconfigurable screen 56 capable of sensing the presence of an interfering object, such as an operator's finger, near, but not necessarily touching, the surface of reconfigurable display 56. A further alternative includes a conventional light pen having an optical sensor capable of generating a signal in response to the passage of an electron beam of a cathode ray tube past its sensing element held adjacent reconfigurable display 56. Further alternatives include a mouse or digitizer (not shown) whose motions external to display and manual input 34 are capable of controlling suitable cursors on the surface of reconfigurable display 56. When the cursor is located within a suitable control area 66, a pick device selects the control function.

Some control actions have such serious consequences that it is desirable to require operator confirmation before executing them. Such control actions may include, for example, those resulting in a transition between phases or the initial setting of acceleration and other parameters before executing the acceleration phase. Special handling of such significant control functions may be provided by an execute control area 68 set apart from the remainder of control areas 66.

Control signals generated by control areas 66 are applied on a line 70 to a panel input handler 72. Execute signals generated by execute control area 68 are applied on a line 74 to panel input handler 72. A line 76 from panel screen handler 58 contains required information allowing panel input handler 72 to interpret a control input from control areas 66 which it receives on line 74. For example, a signal on line 70 may include X and Y values representing the area of reconfigurable display 56 stimulated by the operator. Since the locations of control areas 66 may move from phase to phase, and since the significance of stimulation of a given control area 66 at an X-Y position is only determined in relation to the phase in use, the relationship between the phase and the X-Y positions of control areas 66 is contained in panel input handler 72. Thus, for a given X-Y stimulation, panel input handler 72 contains the information required to produce a control command signal for application on a line 78 to the circuits in I/O and other modules 54 which prepare the control command signal for transmission on control line 36 or line 39.

A panel screen selector 80 contains logic for determining the present phase and a library of screens related to the phases of operation of steam turbine-generator system 10. A line 82 communicates signals from which the current phase can be determined from I/O and other modules 54 to panel screen selector 80. Panel screen selector 80 transmit the parameters defining the requirements for the current phase on a line 84 to panel screen handler 58 which thereafter provides the display and control data representing the screen for the present phase on line 59 to display and manual input 34 as well as retaining the parameters required for interpreting control inputs as previously described.

The conditions of relevant signals on line 39 and speed and power feedback line 51, when transmitted on line 82, permit panel screen selector 80 to determine uniquely the phase of operation currently being performed and to determine whether the parameters indicating that the conditions appropriate for transition to the next phase are present. Thus, upon determining the current phase, panel screen selector 80 supplies the required screen data to panel screen handler 58 and thence to display and manual input 34.

Panel screen selector 80 may discern the current phase from its inputs in any convenient manner using, for example, logic gates. Panel screen selector 80 preferably contains a digital processor, and most preferably, a programmed microprocessor. Thus, efficiency of apparatus is attained by employing a software decision tree capable of running on the microprocessor.

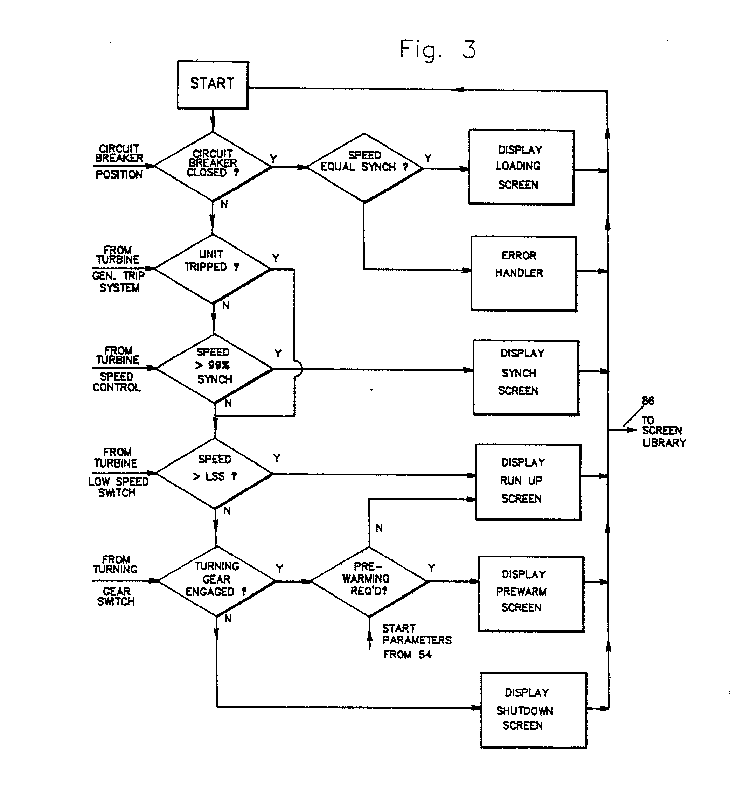

Referring now to Fig. 3, an embodiment of a decision tree is shown. Conventional inputs entering at the left of Fig. 3 are applied to decision elements conventionally shown as diamonds. According to the results of the decisions in the decision elements a signal representing one, and only one, output screen is applied to a screen library (not shown) on a line 86. The screen library may take any convenient form such as, for example, one or more files on a storage medium containing both control and display parameters for every screen required by the phases of operation of steam turbine-generator system 10. The output screen select signal on line 86 causes the relevant parts of the file, or files, to be read out onto line 84 (Fig. 2). The manner in which the phase is selected according to the conditions of the inputs should be self-evident from an examination of Fig. 3.

The screen library, being a conventional data file on any convenient storage medium such as, for example, magnetic, optical, or read-only media, would be completely familiar to one skilled in the art. A further detailed discussion thereof is redundant and is omitted herefrom.

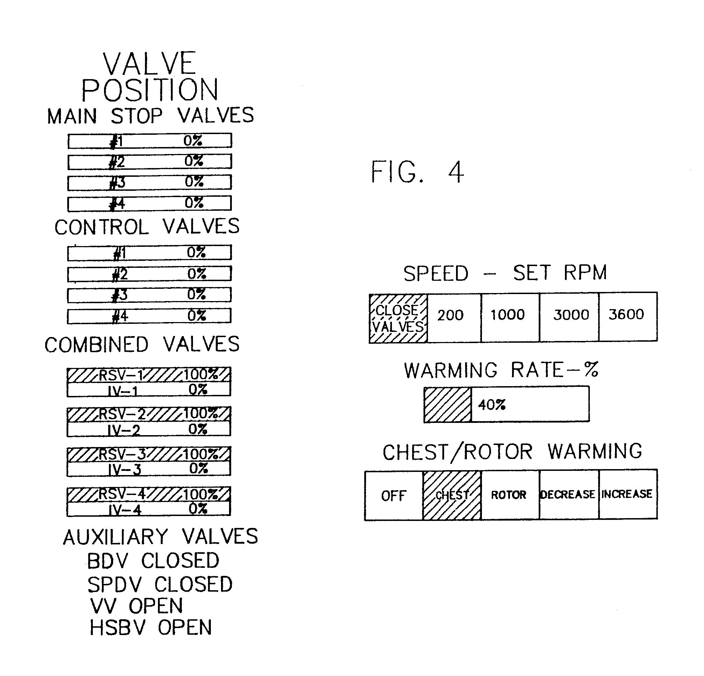

The nature of the displays and controls in the screens will vary according to the type of steam turbine and the level of automatic control applied thereto. For purposes of illustration and not to be considered as limitation, Figs. 4, 5, 6 and 7 illustrate embodiments of screens on display and manual input 34 which may be employed during the phases of warming, rolloff and acceleration, synchronization and loading, respectively.

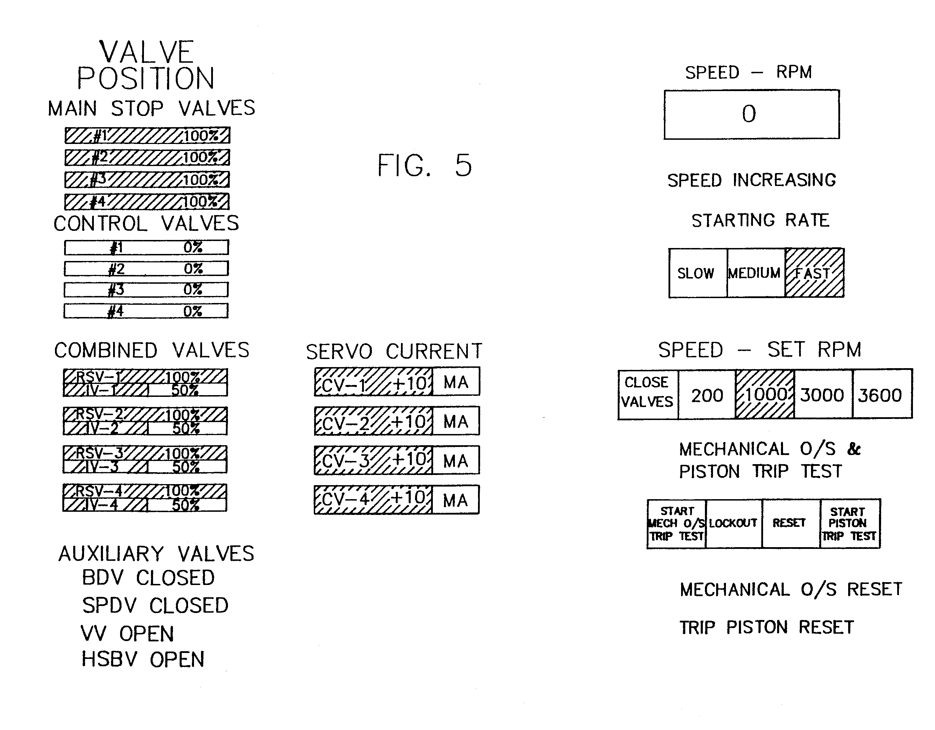

Reference is made specifically to Figs. 4 and 5 to illustrate the changes undergone by display and manual input 34 in the transition between the warming and rolloff phases. Besides the valve conditions, the warming screen of Fig. 4 is principally concerned with controlling the indicating the warming rate and the speed of steam turbine-generator system 10. In contrast, the rolloff and acceleration screen (Fig. 5), which is selected as soon as the speed of steam turbine-generator system 10 exceeds a low-speed threshold, includes a speed indicator, starting rate combined control and indicator, a speed set control and indicator as well as relevant reset switches. In addition, a set of servo current indicators are provided for this phase. As indicated in the displays for the combined valve positions, a bar and alphanumeric indicator may be combined in the same area of display and manual input 34, if desired.

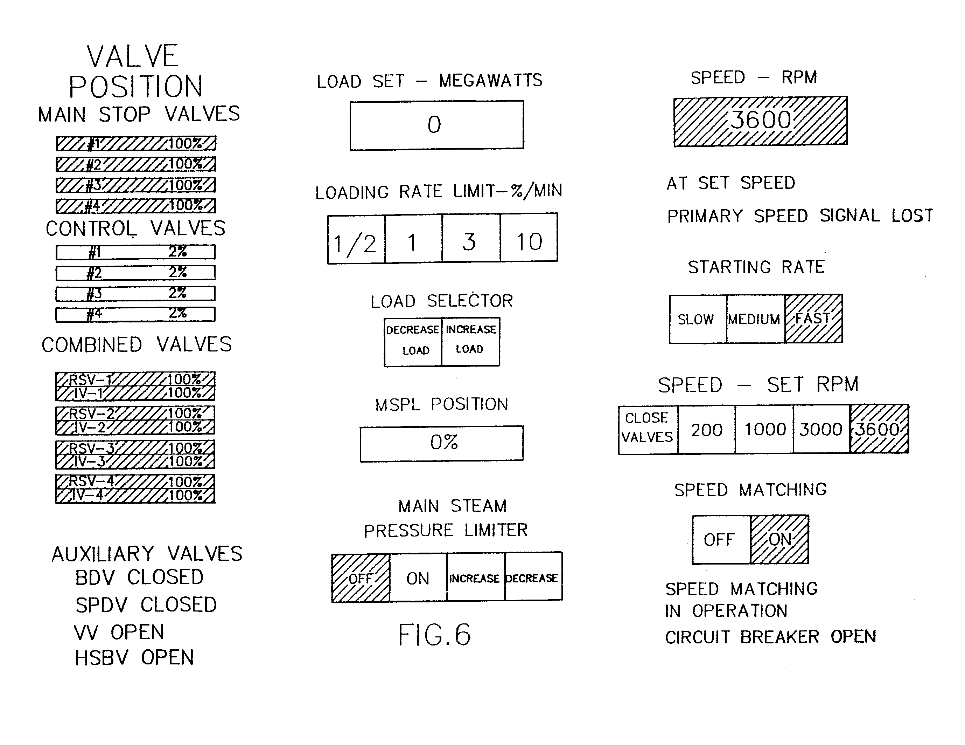

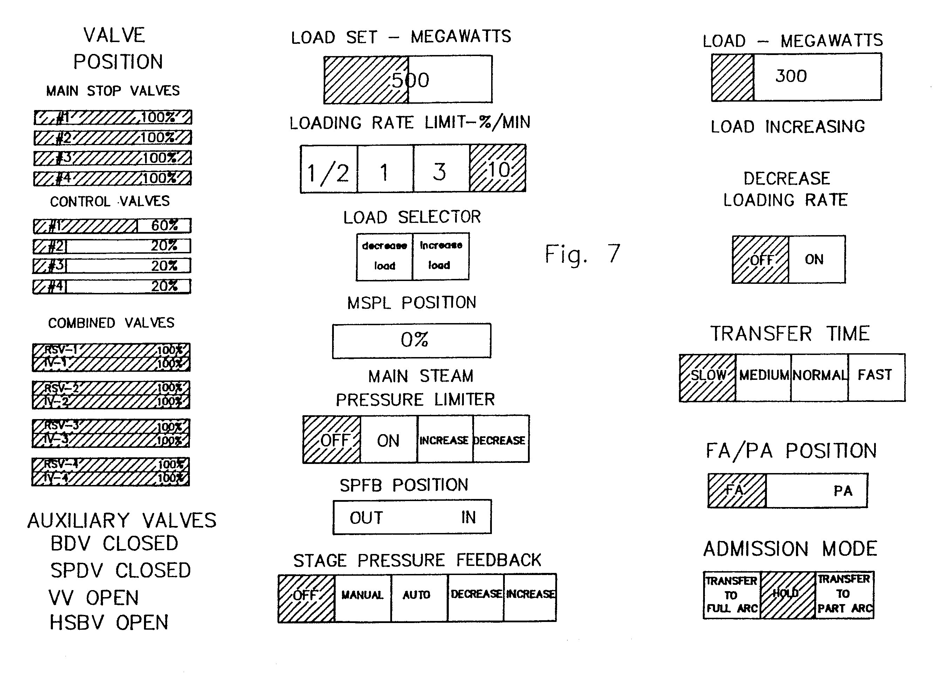

A comparison of Figs. 6 and 7 with Figs. 4 and 5, and with each other, shows the changes in display and manual input 34 wrought by the desire to display selectively all of the data and provide all controls relevant to a phase but to omit all controls and displays not relevant to the phase. For example, the loading screen in Fig. 7 omits an indication of rotor speed since, once the electrical output of electric generator 30 is coupled to the network, the network frequency governs the rotor speed and local control has no influence on such speed. Thus, an indication of rotor speed would be superfluous in this phase and is properly omitted from the screen therefore.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention.

## Claims

1. Integrated controls and displays for a turbomachine, said turbomachine having at least first and second phases of operation, comprising a display means (56); and characterized in that it further comprises:
means (80) for defining at least first and second control and display screens;
said first control and display screen having first controls and first displays related to said first phase of operation;
said second control and display screen having second controls and second displays related to said second phase of operation;
at least one of said second controls and second displays being different from at least one of said first controls and first displays;
control means integrated with said display means for accepting manual control inputs;
screen handler means (58) responsive to an existence of said first phase for displaying said first control and display screen on said display in response to the existence of said first phase;
said screen handler means including means for displaying indicia identifying said first controls during said first phase, whereby manual inputs to said control means appropriate to said first phase are enabled;
said screen handler means being further responsive to an existence of said second phase for displaying said second control and display screen on said display in response to the existence of said second phase; and
said screen handler means including means for displaying indicia identifying said second controls during said second phase, whereby manual inputs to said control means appropriate to said second phase are enabled.

2. Integrated controls and displays according to claim 1 wherein said means (80) for defining includes a panel screen selector, said panel screen selector including a screen library, said screen library including said at least first and second control and display screens and being responsive to said at least first and second phases of operation for transmitting an appropriate one of said at least first and second control and display screens to said panel screen handler (58).

3. Integrated controls and displays according to claim 1 or claim 2 wherein said screen handler (58) includes means for interpreting control inputs whereby desired controls are applied.

4. Integrated controls and displays according to claim 3 wherein said means for interpreting control inputs includes means for receiving X and Y positions of a control input on said display means (56) and for interpreting said X and Y positions in terms of control actions to be performed.

5. Integrated controls and displays according to any of claims 1 to 4 wherein said control means includes a touch screen.

6. Integrated controls and displays according to any of claims 1 to 4 wherein said control means includes an electro-optical sensing device for sensing a presence of an object in the vicinity of an X and Y location adjacent said display.

7. Integrated controls and displays according to any of claims 1 to 4 wherein said control means includes at least one of a light pen, a mouse, and a digitizing tablet.

Fig. 1

DISPLAY AND MANUAL INPUT

32 — CONTROL SYSTEM

34

36 — CONTROL

51 — SPEED POWER

FEEDBACK & CONTROL

39

20

30

12 — BOILER

38

44

16 — HP TURBINE

18 — REHEAT TURBINE

22

28

PWR.

GEN.

24

26

COND.

50

40

42

48

52

46 — STEAM

VALVES & CONTROLS — 14

10

0275192

Fig. 2

0275192

Fig. 3

## VALVE POSITION

### MAIN STOP VALVES

| #1 | 0% |
|---|---|
| #2 | 0% |
| #3 | 0% |
| #4 | 0% |

### CONTROL VALVES

| #1 | 0% |
|---|---|
| #2 | 0% |
| #3 | 0% |
| #4 | 0% |

### COMBINED VALVES

| RSV-1 | 100% |
|---|---|
| IV-1 | 0% |

| RSV-2 | 100% |
|---|---|
| IV-2 | 0% |

| RSV-3 | 100% |
|---|---|
| IV-3 | 0% |

| RSV-4 | 100% |
|---|---|
| IV-4 | 0% |

### AUXILIARY VALVES
BDV CLOSED
SPDV CLOSED
VV OPEN
HSBV OPEN

## FIG. 4

### SPEED – SET RPM

| CLOSE VALVES | 200 | 1000 | 3000 | 3600 |
|---|---|---|---|---|

### WARMING RATE–%

| | 40% |
|---|---|

### CHEST/ROTOR WARMING

| OFF | CHEST | ROTOR | DECREASE | INCREASE |
|---|---|---|---|---|

# VALVE POSITION

## MAIN STOP VALVES

| | |
|---|---|
| #1 | 100% |
| #2 | 100% |
| #3 | 100% |
| #4 | 100% |

## CONTROL VALVES

| | |
|---|---|
| #1 | 0% |
| #2 | 0% |
| #3 | 0% |
| #4 | 0% |

## COMBINED VALVES

| | |
|---|---|
| RSV-1 | 100% |
| IV-1 | 50% |
| RSV-2 | 100% |
| IV-2 | 50% |
| RSV-3 | 100% |
| IV-3 | 50% |
| RSV-4 | 100% |
| IV-4 | 50% |

## AUXILIARY VALVES

BDV CLOSED

SPDV CLOSED

VV OPEN

HSBV OPEN

## SERVO CURRENT

| | | |
|---|---|---|
| CV-1 | +10 | MA |
| CV-2 | +10 | MA |
| CV-3 | +10 | MA |
| CV-4 | +10 | MA |

FIG. 5

## SPEED — RPM

| |
|---|
| 0 |

SPEED INCREASING

STARTING RATE

| SLOW | MEDIUM | FAST |
|---|---|---|

## SPEED — SET RPM

| CLOSE VALVES | 200 | 1000 | 3000 | 3600 |
|---|---|---|---|---|

MECHANICAL O/S &
PISTON TRIP TEST

| START MECH O/S TRIP TEST | LOCKOUT | RESET | START PISTON TRIP TEST |
|---|---|---|---|

MECHANICAL O/S RESET

TRIP PISTON RESET

## VALVE POSITION

### MAIN STOP VALVES

| | |
|---|---|
| #1 | 100% |
| #2 | 100% |
| #3 | 100% |
| #4 | 100% |

### CONTROL VALVES

| | |
|---|---|
| #1 | 2% |
| #2 | 2% |
| #3 | 2% |
| #4 | 2% |

### COMBINED VALVES

| | |
|---|---|
| RSV-1 | 100% |
| IV-1 | 100% |
| RSV-2 | 100% |
| IV-2 | 100% |
| RSV-3 | 100% |
| IV-3 | 100% |
| RSV-4 | 100% |
| IV-4 | 100% |

AUXILIARY VALVES
BDV CLOSED
SPDV CLOSED
VV OPEN
HSBV OPEN

## LOAD SET — MEGAWATTS

| 0 |
|---|

## LOADING RATE LIMIT—%/MIN

| 1/2 | 1 | 3 | 10 |
|-----|---|---|----|

### LOAD SELECTOR

| DECREASE LOAD | INCREASE LOAD |
|---|---|

### MSPL POSITION

| 0% |
|----|

### MAIN STEAM PRESSURE LIMITER

| OFF | ON | INCREASE | DECREASE |
|-----|----|----------|----------|

## FIG.6

## SPEED — RPM

| 3600 |
|------|

AT SET SPEED

PRIMARY SPEED SIGNAL LOST

### STARTING RATE

| SLOW | MEDIUM | FAST |
|------|--------|------|

## SPEED — SET RPM

| CLOSE VALVES | 200 | 1000 | 3000 | 3600 |
|--------------|-----|------|------|------|

### SPEED MATCHING

| OFF | ON |
|-----|----|

SPEED MATCHING
IN OPERATION
CIRCUIT BREAKER OPEN

## VALVE
## POSITION

### MAIN STOP VALVES

| | |
|---|---|
| #1 | 100% |
| #2 | 100% |
| #3 | 100% |
| #4 | 100% |

### CONTROL VALVES

| | |
|---|---|
| #1 | 60% |
| #2 | 20% |
| #3 | 20% |
| #4 | 20% |

### COMBINED VALVES

| | |
|---|---|
| RSV-1 | 100% |
| IV-1 | 100% |
| RSV-2 | 100% |
| IV-2 | 100% |
| RSV-3 | 100% |
| IV-3 | 100% |
| RSV-4 | 100% |
| IV-4 | 100% |

## AUXILIARY VALVES
### BDV CLOSED
### SPDV CLOSED
### VV OPEN
### HSBV OPEN

## LOAD SET – MEGAWATTS

| 500 |
|---|

## LOADING RATE LIMIT–%/MIN

| 1/2 | 1 | 3 | 10 |
|---|---|---|---|

### LOAD SELECTOR

| decrease load | increase load |
|---|---|

### MSPL POSITION

| 0% |
|---|

## MAIN STEAM
## PRESSURE LIMITER

| OFF | ON | INCREASE | DECREASE |
|---|---|---|---|

### SPFB POSITION

| OUT | IN |
|---|---|

## STAGE PRESSURE FEEDBACK

| OFF | MANUAL | AUTO | DECREASE | INCREASE |
|---|---|---|---|---|

Fig. 7

## LOAD – MEGAWATTS

| 300 |
|---|

### LOAD INCREASING

### DECREASE
### LOADING RATE

| OFF | ON |
|---|---|

## TRANSFER TIME

| SLOW | MEDIUM | NORMAL | FAST |
|---|---|---|---|

## FA/PA POSITION

| FA | PA |
|---|---|

## ADMISSION MODE

| TRANSFER TO FULL ARC | HOLD | TRANSFER TO PART ARC |
|---|---|---|